# EUROPÄISCHE PATENTANMELDUNG

(11) **EP 0 976 943 A1**
(43) Veröffentlichungstag der Anmeldung: **02.02.2000**
(21) Anmeldenummer: 99114045.0
(22) Anmeldetag: 20.07.1999
(51) Int. Cl.: F16D 49/16, F16D 65/06, B66D 5/08, G01L 3/18

(54) **Bremse**

(30) Priorität: 29.07.1998 EP 98810729
(71) Anmelder: INVENTIO AG, CH-6052 Hergiswil (CH)
(72) Erfinder: Ammon, Urs, Masch. Ing. HTL, 6030 Ebikon (CH)

(57) **Zusammenfassung**

Diese Drehmoment-Messeinrichtung für eine Bremse beruht auf dem Prinzip der Messung der elastischen Verformung aktiver Teile einer Bremse. Das erfindungsgemässe Prinzip wird am Beispiel einer Backenbremse dargestellt und erläutert. Hierbei sind an den Bremshebeln (2, 3) Bereiche (23, 24) mit reduziertem Biegewiderstandsmoment gebildet, welche sich unter Drehmomenteinwirkung elastisch verformen. Die elastische Verformung wird mittels in diesen Bereichen (23, 24) angeordneten und als Messbrücke geschalteten Dehnungsmessstreifen (R1-R4) erfasst und die erhaltenen Spannungssignale werden zwecks Verarbeitung zu Referenzsignalen (28) an die Aufzugssteuerung weitergeleitet. Mit diesen Referenzsignalen wird vor dem Oeffnen der Bremse über die Antriebssteuerung im Antriebsmotor ein das gemessene Drehmoment kompensierendes Motordrehmoment erzeugt und so das resultierende Drehmoment an der Bremswelle auf Null gebracht. Daraus resultiert nach dem Oeffnen der Bremse ein ruckfreies Anfahren ohne Drehmomentsprung.

## Beschreibung

Die Erfindung betrifft eine Bremse mit Drehmoment-Messeinrichtung, insbesondere für Aufzüge, wobei die Bremse, beispielsweise eine Backenbremse, Bremshebel mit Bremsbacken aufweist, und wobei Messglieder der Drehmoment-Messeinrichtung mit den Bremshebeln verbunden sind.

Bremsen mit Drehmomenterfassung ermöglichen die Erzeugung eines Gegendrehmomentes des Antriebsmotors um den Betrag des gemessenen Drehmomentes, womit das resultierende Drehmoment an der Bremswelle gleich Null wird, so dass der Aufzug nach dem Lüften der Bremse ruckfrei, also ohne Drehmomentsprung anfahren kann.

Mit der deutschen Patentschrift DE 37 07 276 ist eine Drehmoment messende Backenbremse bekannt geworden, die mit den Bremshebeln verbundene Messglieder aufweist. Die Bremsbacken sind mittels einer Drehwelle schwenkbar an den Bremshebeln angeordnet, wobei die Drehwelle über Wälzlager in den Bremsbacken gelagert ist. Die Drehwelle ist mit dem einen Ende des das Drehmoment messenden Messgliedes verbunden, das mit seinem anderen Ende so am Bremshebel befestigt ist, dass es einen Hebel bildet, dessen mit der Drehwelle verbundenes Ende innerhalb enger Grenzen bewegbar ist. An entgegengesetzten Seiten des Schaftes des hebelartigen Messgliedes sind Dehnungsmessstreifen angeordnet, die beim Messen ein Signal erzeugen, das zu dem vom anderen Bremshebel gelieferten Signal addiert wird. Diese Signale werden weiterverarbeitet und derart ausgewertet, dass die Bremse erst dann freigegeben wird, wenn das aus der Belastung resultierende Drehmoment Null ist.

Da die vorstehend beschriebene Einrichtung zur Messung des Drehmomentes aus einer Anzahl ineinandergreifenden mechanischen Teilen besteht, wird die Einrichtung entsprechend relativ aufwendig und kompliziert, was höhere Kosten verursacht und die Genauigkeit der Drehmomentmessung ungünstig beeinflussen kann.

Der Erfindung liegt die Aufgabe zugrunde, eine Bremse mit Drehmoment-Messeinrichtung der eingangs genannten Art vorzuschlagen, die vorstehend erwähnte Nachteile nicht aufweist und die bei einfachstem Aufbau ein ruckfreies, komfortables Anfahren des Aufzuges ermöglicht.

Die erfindungsgemässe Drehmoment-Messeinrichtung zeichnet sich dadurch aus, dass für die Messung eines Drehmomentes an einer Bremse der Effekt der elastischen Verformung des Materials eines Hauptteiles der Bremsarmatur unter Krafteinwirkung, beispielsweise der Bremshebel einer Backenbremse, ausgenützt wird. Der Vorteil dieser Messeinrichtung ist darin zu sehen, dass hierzu keine zusätzlichen mechanischen Uebertragungsglieder benötigt werden und dass das Messprinzip auch für andere Arten von Bremsen, beispielsweise auch für eine Scheibenbremse anwendbar ist.

Die elastische Verformung der Bremshebel wird mit Mitteln registriert, welche, unmittelbar aufgebracht an mindestens einer Stelle am Bremshebel, ihre elektrischen Eigenschaften entsprechend der elastischen Verformung der Bremshebel verändern.

An den Bremshebeln sind durch entsprechende Ausgestaltung Bereiche vorgesehen, welche gegenüber benachbarten Bereichen eine unter Krafteinwirkung grössere elastische Verformung erfahren. Das ergibt für die Registrierung der elastischen Verformung ebenfalls grössere Veränderungen der elektrischen Eigenschaften der registrierenden Mittel. Somit sind auch kleinere Verstärkungsfaktoren für die Weiterverarbeitung der Daten aus den veränderten elektrischen Eigenschaften nötig, was für die Messgenauigkeit von Vorteil ist.

Die Ausgestaltung von Bereichen, welche gegenüber benachbarten Bereichen eine grössere elastische Verformung (Dehnung) aufweisen, kann beispielsweise durch Querschnittsverminderung in diesen Bereichen erfolgen. Eine Querschnittverminderung kann auch auf einfache Art eine Verminderung des Biegewiderstandsmomentes mit dementsprechend grösseren elastischen Verformungen bewirken.

Eine beispielhafte und einfache Methode zur Querschnittverminderung besteht darin, an gewünschter Stelle am Bremshebel einen Durchbruch, kombiniert mit äusseren Einschnürungen vorzusehen. Eine unter Krafteinwirkung erfolgende elastische Verformung konzentriert sich so zum grössten Teil auf diese geschaffenen Engstellen.

Die Mittel für die Registrierung der elastischen Verformung werden deshalb an diesen Engstellen angeordnet mit dem vorgehend erwähnten Effekt der durch die elastische Verformung erzeugten grösstmöglichen Veränderungen ihrer Eigenschaften in der Form von messbaren elektrischen Daten dieser Mittel.

Die registrierenden Mittel sind als paarweise an den engsten Stellen aufgebrachte Dehnungsmesssteifen vorgesehen, welche in bekannter Weise der elastischen Verformung ihrer Unterlage entsprechend ihre Eigenschaften, beispielsweise die Widerstandswerte, verändern.

Die Dehnungsmessstreifen, bzw. Ihre Widerstände bilden eine Brückenschaltung, welche mit einer Stromversorgung und mit einer Signalwandlerschaltung verbunden ist. Der Ausgang der letzteren wird einem Mikroprozessor zur Weiterverarbeitung für die Antriebssteuerung des Aufzuges zugeführt. Es kann mit den Signalen dieser Drehmoment-Messeinrichtung die Antriebssteuerung beeinflusst werden. Das geschieht in der Weise, dass im Antriebsmotor vor dem Oeffnen der Bremse ein Drehmoment erzeugt wird, das dem gemessenen Drehmoment entspricht. Dadurch gibt es nach dem Oeffnen der Bremse keinen Drehmomentsprung, und somit ist ein ruckfreies Anfahren das Resultat.

Bei einer Backenbremse mit dieser Drehmoment-Messeinrichtung können die Bremsbacken unbeweglich mit den Bremshebeln verbunden sein. Das ergibt eine Vereinfachung und eine entsprechende Kostenreduktion, sowohl für eine Backenbremse wie auch für andere Bremsentypen.

Im folgenden wird die Erfindung anhand eines Ausführungsbeispieles im Zusammenhang mit der Zeichnung näher erläutert. Es zeigen:
Fig. 1 eine Ansicht der erfindungsgemässen Drehmoment-Messeinrichtung an einer Backenbremse,
Fig. 2 ein Blockschaltbild einer Auswerteelektronik der Drehmoment-Messeinrichtung, und
Fig. 3 ein Diagramm der Spannungen an Messgliedern der Drehmoment-Messeinrichtung in Abhängigkeit der Reibkraft an der Backenbremse.

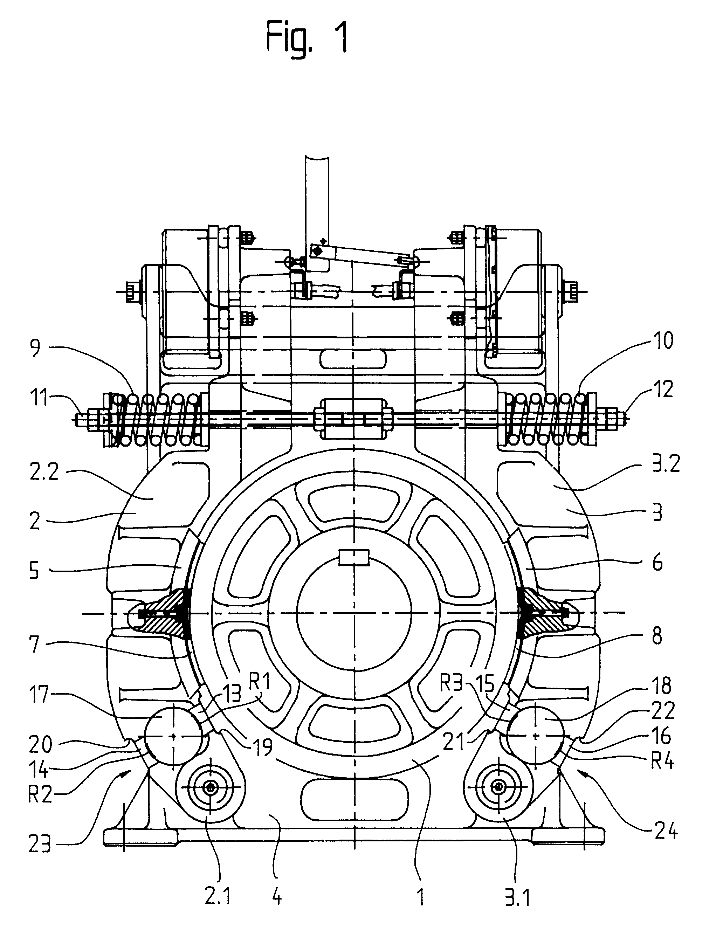

In der Fig. 1 wird die erfindungsgemässe Drehmoment-Messeinrichtung am Beispiel einer Backenbremse dargestellt und erläutert. In dieser Fig. 1 ist mit 1 eine drehfest mit dem Antrieb eines Aufzuges verbundene Bremstrommel bezeichnet. Zwei Bremshebel 2, 3 sind an ihren unteren Enden 2.1, 3.1 schwenkbar an einem Bremsgehäuse 4 gelagert. An den Bremshebeln 2, 3 sind Bremsbacken 5, 6 mit Bremsbelägen 7, 8 befestigt. Die oberen Enden 2.2, 3.2 der Bremshebel 2, 3 sind über Bremsfedern 9, 10 und Zugstangen 11, 12 mit dem Bremsgehäuse 4 sowie mit einer nicht näher beschriebenen, an sich bekannten Bremslüfteinrichtung verbunden. Im Bereich der schwenkbaren Lagerung an den unteren Enden 2.1, 3.1 der Bremshebel 2, 3 sind Bereiche 23, 24 mit vermindertem Biegewiderstandsmoment in der Form von Messglieder bildenden Engstellen 13, 14 bzw. 15, 16 vorgesehen, die durch beispielsweise kreisförmige Durchbrüche 17, 18 in den Bremshebeln 2, 3 und einschnürende Ausformungen 19, 20 bzw. 21, 22 an deren gebogenen Längsseiten gebildet werden. An den Engstellen 13, 14 bzw. 15, 16 sind Messsignalerzeuger R1,R2 bzw. R3,R4 in Form von Dehnungsmessstreifen direkt auf den Bremshebeln angebracht, die einander gegenüberliegend am Rand der Durchbrüche 17, 18 angeordnet sind. Die Bremshebel 2, 3 werden insbesondere an diesen durch analytische Betrachtung gefundenen Engstellen 13, 14 bzw. 15, 16 während der Drehmoment- bzw. Lastmessung elastisch verformt, wobei, wie nachstehend näher beschrieben, der Verformung und damit dem Drehmoment bzw. der Last entsprechende Signale bzw. elektrische Daten abgegeben werden.

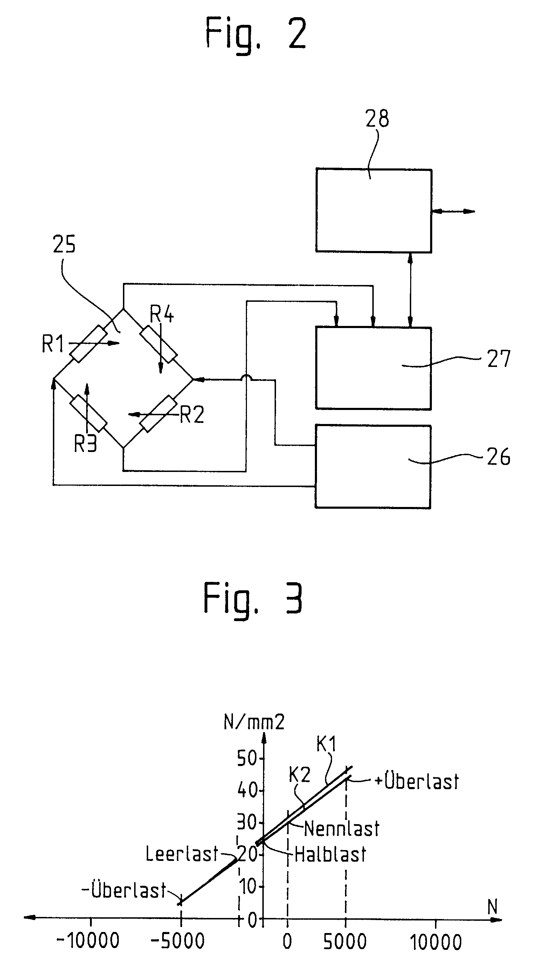

Gemäss Fig. 2 sind die Dehnungsmessstreifen R1,R2 und R3,R4 in jeweils gegenüberliegenden Zweigen einer Brückenschaltung 25 angeordnet. Die Brückenschaltung 25 ist mit einer Stromversorgung 26 und einem AD-Wandler 27 verbunden, der über einen Mikroprozessor 28 mit einer nicht weiter dargestellten und beschriebenen Aufzugssteuerung in Verbindung steht. Die im unbelasteten Zustand auf Null abgeglichene Brücke wird durch die Aenderung der Widerstände der Dehnungsmessstreifen R1,R2,R3,R4 bei mit Drehmoment belasteten Bremshebeln 2, 3 unsymmetrisch und ergibt ein positives oder negatives Spannungssignal mit einem Wert entsprechend dem Betrag und der Richtung des herrschenden Drehmomentes. Das Spannungssignal wird der Antriebssteuerung als Referenz für das vom Antriebsmotor zu kompensierende Drehmoment zugeführt.
Diese Drehmomentkompensation wird entweder dadurch erreicht, dass der Antriebsregler im Antriebsmotor direkt ein dem Signalpegel entsprechendes, der Belastung entgegenwirkendes Drehmoment entstehen lässt, oder, einfacher und genauer, dadurch, dass vor der Bremslüftung der Regler das Drehmoment im Motor solange ansteigen lässt, bis ein Null-Signal der DMS-Messbrücke eine Bremsbelastung von Null meldet.

In der Fig. 3 ist die Abszisse der Reibkraft an einer Backenbremse bzw. den Lastzuständen (in Newton N) und die Ordinate den Spannungen (in Newton pro Quadratmillimeter N/mm2) an den Engstellen 13,14 des Bremshebels 2 zugeordnet, wobei Kennlinien K1,K2 den Spannungsverlauf an den Engstellen 13,14 bei verschiedenen Reibkräften bzw. Lastzuständen des Aufzuges darstellen.

Als Dehnungsmessstreifen R1-R4 können solche mit einer Widerstandswicklung verwendet.werden oder Halbleiterelemente, bei denen Widerstandsbahnen in ein Halbleitersubstrat aus Silizium eindiffundiert sind.

Das erfindungsgemässe Prinzip der Drehmoment-Messeinrichtung mittels Messung der elastischen Verformung eines Bremshebels lässt sich ebenfalls bei einer Scheibenbremse anwenden. Hierbei werden die Mittel zum Messen der elastischen Verformung in analoger Weise an den, auch als Schenkel bezeichneten, Bremshebeln der Zange einer Scheibenbremse angeordnet. Sinngemäss werden an diesen Bremshebeln der Bremszange ebenfalls Bereiche mit gegenüber benachbarten Bereichen reduziertem Biegewiderstandsmoment vorgesehen und in diesen Bereichen die Mittel zum Messen der elastischen Verformung angeordnet.

Die Anwendung des erfindungsgemässen Prinzips der Drehmomentmessung ist unabhängig von der Art der Bremslüfteinrichtung.

Grundsätzlich kann an einer Bremse jedes mit dem Bremsmoment in irgend einer Weise belastete Teil für die erfindungsgemässe Drehmoment-Messeinrichtung vorgesehen werden.

Für die Bildung eines Bereiches mit erhöhter Dehnung sind ausser der gezeigten örtlichen Verminderung des Materialsquerschnittes weitere Lösungen möglich und anwendbar. Zum Beispiel können durch lokale Veränderung der Materialeigenschaften eines Bremshebels mittels metallurgischer Verfahren Zonen mit erhöhter Elastizität erzeugt werden. Oder durch Einfügung von Material mit geringerem Elastizitätsmodul in den Messbereichen werden dort höhere Dehnungen erreicht, wobei dieses eingefügte Material mit dem Bremhebelmaterial eine feste Verbindung aufweisen soll.

## Patentansprüche

1. Bremse mit Drehmoment-Messeinrichtung, insbesondere für Aufzüge, wobei die Bremse Bremshebel (2, 3) mit Bremsbacken (5, 6) aufweist und wobei Messglieder der Drehmoment-Messeinrichtung mit den Bremshebeln (2, 3) verbunden sind,
dadurch gekennzeichnet,
dass Mittel (13-16) zum Messen der elastischen Verformung der Bremshebel vorgesehen sind.

2. Bremse mit Drehmoment-Messeinrichtung nach Anspruch 1,
dadurch gekennzeichnet,
dass die Mittel (13-16) Signalerzeuger (R1-R4) zum Abgeben von der elastischen Verformung der Bremshebel (2, 3) entsprechenden Signalen aufweisen.

3. Bremse mit Drehmoment-Messeinrichtung nach Anspruch 1,
dadurch gekennzeichnet,
dass die Bremshebel (2, 3) mindestens einen Bereich (23, 24) mit gegenüber benachbarten Bereichen geringerem Querschnitt oder geringerem Biegewiderstandsmoment aufweisen.

4. Bremse mit Drehmoment-Messeinrichtung nach Anspruch 3,
dadurch gekennzeichnet,
dass die Bereiche (23, 24) mit geringerem Querschnitt oder geringerem Biegewiderstandsmoment Durchbrüche (17, 18) und/oder einschnürende Ausformungen (19, 20) aufweisen.

5. Bremse mit Drehmoment-Messeinrichtung nach einem der vorhergehenden Ansprüche,
dadurch gekennzeichnet,
dass die Mittel (R1-R4) zum Messen der elastischen Verformung in den Bereichen (23, 24) mit vermindertem Querschnitt oder vermindertem Biegewiderstandsmoment angeordnet sind.

6. Bremse mit Drehmoment-Messeinrichtung nach einem der vorhergehenden Ansprüche,
dadurch gekennzeichnet,
dass als Mittel (R1-R4) zum Messen der elastischen Verformung Dehnungsmessstreifen vorgesehen sind.

7. Bremse mit Drehmoment-Messeinrichtung nach einem der vorhergehenden Ansprüche,
dadurch gekennzeichnet,
dass als Mittel (R1-R4) zum Messen der elastischen Verformung Halbleiterelemente vorgesehen sind.

8. Bremse mit Drehmoment-Messeinrichtung nach Anspruch 6 dadurch gekennzeichnet,
dass die Mittel (R1,R2) zum Messen der elastischen Verformung des einen Bremshebels (2) und die Mittel (R3,R4) zum Messen der elastischen Verformung des anderen Bremshebels (3) je in gegenüberliegenden Zweigen einer Brückenschaltung (25) angeordnet sind, und dass die Brückenschaltung (25) mit einer Stromversorgung (26) und einem AD-Wandler (27) verbunden ist, der über einen Mikroprozessor (28) mit einer Aufzugssteuerung in Verbindung steht.

9. Bremse mit Drehmoment-Messeinrichtung nach einem der vorhergehenden Ansprüche,
dadurch gekennzeichnet,
dass die Bremsbacken (5, 6) unbeweglich an den Bremshebeln (2, 3) angeordnet sind.
